# FASCICULE DE BREVET EUROPEEN

(11) **EP 3 333 871 B1**
(45) Date de publication et mention de la délivrance du brevet: **31.03.2021**
(21) Numéro de dépôt: 17205838.0
(22) Date de dépôt: 07.12.2017
(51) Int. Cl.: H01H 50/00, H01H 50/04, H01H 11/00

(54) **APPAREIL ÉLECTRIQUE DE COUPURE D'UN COURANT ÉLECTRIQUE**
ELEKTRISCHES GERÄT ZUR UNTERBRECHUNG EINES ELEKTRISCHEN STROMS
ELECTRICAL APPARATUS FOR CUTTING AN ELECTRICAL CURRENT

(30) Priorité: 08.12.2016 FR 1662136
(43) Date de publication de la demande: 13.06.2018
(73) Titulaire: Schneider Electric Industries SAS, 92500 Rueil-Malmaison (FR)
(72) Inventeur: COMTOIS, Patrick, 38050 Grenoble Cedex 09 (FR); LARCHER, Patrick, 38050 Grenoble Cedex 09 (FR)
(74) Mandataire: Lavoix

(56) Documents cités:
- WO-A1-2014/096579
- DE-A1- 2 149 365
- JP-U- S6 059 440
- JP-U- S6 271 846
- US-A- 3 319 036
- US-A- 3 835 425

## Description

L'invention concerne un appareil électrique de coupure d'un courant électrique.

Dans le domaine des appareils électriques de coupure d'un courant électrique à basse tension et à haute intensité, on connait de WO-2014/096579-A1 un tel appareil comprenant un bloc de coupure et un bloc d'actionnement. Le bloc de coupure comporte plusieurs éléments de coupure, aussi nommés ampoules de coupure, chacun destiné à être raccordé électriquement à un circuit électrique par l'intermédiaire de terminaux de connexion. Chaque élément de coupure est adapté pour commuter entre un état passant, dans lequel il autorise la circulation du courant entre les terminaux, et un état bloquant dans lequel il empêche la circulation de ce courant électrique. Cette commutation est réalisée au moyen d'un organe d'attelage ménagé sur une face avant de chaque élément de coupure et prenant par exemple la forme de tête de vis.

Le bloc d'actionnement comporte un électroaimant commandable et une barquette mobile, pourvue d'une plaque ferromagnétique, qui se déplace en translation sous l'effet de l'électroaimant. La barquette est solidaire en translation avec les organes d'attelage des éléments de coupure, entraînant ainsi leur commutation, lorsqu'elle est déplacée sous l'action de l'électroaimant

De plus, le document US 3 319 036 A divulgue un appareil électrique de coupure d'un courant électrique, comportant un bloc de coupure, incluant des éléments de coupure d'un courant électrique, un bloc actionneur pourvu d'un électroaimant commandable adapté pour générer une force électromagnétique en réponse à un signal de commande, une barquette mobile pourvue d'une plaque magnétique et une interface de raccordement, distincte du bloc de coupure et du bloc actionneur, cette interface de raccordement étant intercalée entre le bloc de coupure et le bloc actionneur, la barquette mobile étant logée à l'intérieur de l'interface de raccordement.

Un inconvénient de ces appareils électriques connus est que le bloc actionneur doit être adapté pour chaque type de bloc de coupure. En particulier, les dimensions du bloc de coupure peuvent être différentes selon le type du courant électrique, par exemple selon le niveau d'intensité ou selon le nombre de phases électriques. Cela complique la fabrication industrielle de l'appareil électrique, car il faut prévoir autant d'agencements différents du bloc d'actionnement qu'il y a de variantes du bloc de coupure.

C'est à ces inconvénients qu'entend plus particulièrement remédier l'invention en proposant un appareil électrique de coupure qui soit plus simple à fabriquer industriellement.

A cet effet, l'invention concerne un appareil électrique de coupure d'un courant électrique, comportant :
- un bloc de coupure, incluant des éléments de coupure d'un courant électrique, chacun comportant un organe d'attelage, chaque élément de coupure étant actionnable au moyen de son organe d'attelage, pour commuter cet élément de coupure dans un état bloquant ou laissant passer le courant électrique,
- un bloc actionneur, pourvu d'un électroaimant commandable adapté pour générer une force électromagnétique en réponse à un signal de commande,
- une barquette mobile pourvue d'une plaque magnétique, cette barquette mobile étant adaptée pour exercer, sous l'effet de la force électromagnétique, un effort mécanique qui entraîne en déplacement les organes d'attelage de manière à commuter les éléments de coupure.

L'appareil comporte en outre une interface de raccordement, distincte du bloc de coupure et du bloc actionneur, cette interface de raccordement étant intercalée entre le bloc de coupure et le bloc actionneur, la barquette mobile étant logée à l'intérieur de l'interface de raccordement.

Grâce à l'invention, en logeant la barquette mobile dans une interface de raccordement dédiée, on évite d'avoir besoin d'utiliser un bloc d'actionnement spécifique pour chaque variante possible du bloc de coupure. En effet, c'est l'interface de raccordement qui est dimensionnée et conformée spécifiquement pour être adaptée au bloc de coupure avec lequel elle est associée.

Ainsi, la face de l'interface de raccordement qui est destinée à être raccordée au bloc d'actionnement est la même, quelle que soit la configuration du bloc de coupure. On peut ainsi utiliser un même bloc actionneur quelle que soit la forme du bloc de coupure.

Cela permet de rationaliser le processus industriel de fabrication de l'appareil. En particulier, une pièce coûteuse comme le bloc d'actionnement n'a pas besoin d'être déclinée en de multiples variantes. De plus, la fabrication et/ou l'installation de l'appareil électrique s'en trouve simplifiée, car le fait d'utiliser un même bloc actionneur pour différentes variantes du bloc de coupure réduit les contraintes logistiques liées à la gestion des différentes pièces individuelles, par rapport au cas où il faudrait gérer de multiples variantes du bloc actionneur.

Selon des aspects avantageux mais non obligatoires de l'invention, un tel appareil électrique peut incorporer une ou plusieurs des caractéristiques suivantes, prises isolément ou suivant toute combinaison techniquement admissible :
- l'interface de raccordement comporte un corps principal pourvu d'un dispositif de guidage en translation de la barquette par rapport au corps principal.
- le dispositif de guidage comporte un levier qui raccorde mécaniquement la barquette mobile au corps principal.
- l'interface de raccordement est fixée au bloc de coupure au moyen d'un système de fixation de type tenon-mortaise, l'un ou l'autre du bloc de coupure ou de l'interface de raccordement comportant un tenon, l'autre comportant une rainure de forme complémentaire au tenon.
- la barquette mobile présente une largeur supérieure à la distance entre les organes d'attelage situés sur des côtés opposés de la face avant du bloc de coupure.
- la barquette mobile est munie d'une zone de réception des organes d'attelage pour arrimer la barquette mobile solidaire en translation avec des parties mobiles respectives des éléments de coupure portant les organes d'attelage, la barquette mobile étant dimensionnée pour exercer un effort simultanément sur tous les organes d'attelage lorsqu'elle se déplace sous l'effet de la force électromagnétique.
- les organes d'attelage comportent des vis dont une tête fait saillie par rapport à l'élément de coupure, la barquette mobile étant munie de fourches destinées chacune à enserrer une tête de vis correspondante pour arrimer la barquette mobile aux parties mobiles.
- la commutation de chacun des éléments de coupure est réalisée en déplaçant l'organe d'attelage selon une direction parallèle à la direction de translation de la barquette mobile.
- le bloc de coupure comporte trois éléments de coupure.
- le bloc de coupure comporte quatre éléments de coupure.

L'invention sera mieux comprise et d'autres avantages de celle-ci apparaîtront plus clairement à la lumière de la description qui va suivre d'un mode de réalisation d'un appareil électrique de coupure, donnée uniquement à titre d'exemple et faite en référence aux dessins annexés dans lesquels :
- la figure 1 est une représentation schématique, selon une vue éclatée, d'un appareil électrique de coupure selon un premier mode de réalisation de l'invention ;
- la figure 2 est une représentation schématique, selon une vue éclatée, d'une barquette mobile de l'appareil électrique de la figure 1 ;
- la figure 3 est une représentation schématique, selon une vue en perspective, d'un bloc d'actionnement de l'appareil électrique de la figure 1 ;
- la figure 4 est une représentation schématique, selon une vue écorchée, d'une interface de raccordement fixée à un bloc de coupure de l'appareil électrique de la figure 1 ;
- la figure 5 est une représentation schématique, selon une vue en perspective, de l'interface de raccordement et du bloc de coupure de la figure 4 ;
- la figure 6 est une représentation schématique, selon une vue éclatée, d'un appareil électrique de coupure selon un deuxième mode de réalisation de l'invention.

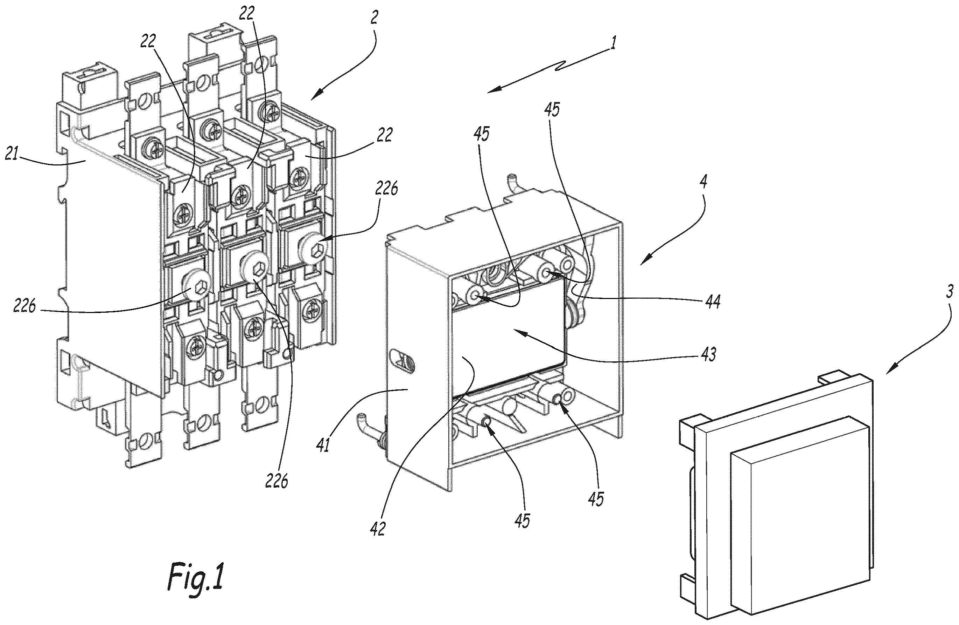

Les figures 1 à 5 représentent un appareil électrique de coupure 1 selon un premier mode de réalisation de l'invention.

L'appareil 1 comporte un bloc de coupure 2, un bloc actionneur 3, aussi nommé bloc d'actionnement, et une interface de raccordement 4 entre le bloc actionneur 3 et le bloc de coupure 2.

L'appareil électrique 1 a pour fonction d'interrompre, ou en alternance, d'autoriser la circulation d'un courant électrique de façon commandable, par exemple en réponse à un signal de commande émis par une unité de commande, non illustrée.

Par exemple, l'appareil 1 est destiné à commander la coupure de courants électriques alternatifs conformément aux catégories d'emploi courant de type AC1, AC3 ou AC4 définies par la norme IEC60947-3 de la Commission Electrotechnique Internationale.

Le bloc de coupure 2 comporte une embase fixe 21 et des éléments de coupure 22. L'embase 21 est par exemple fixée, sur sa face arrière, à un tableau électrique.

Par exemple, l'appareil électrique 1 est destiné à être utilisé avec un courant électrique triphasé. Chaque élément de coupure 22 est alors associé à une composante de phases électriques de ce courant triphasé. Les éléments de coupure 22 sont ici au nombre de trois et sont identiques entre eux.

L'embase 21 comporte des logements 23, chacun adapté pour recevoir un des éléments de coupure 22. Les éléments de coupure 22 sont amovibles et peuvent être retirés des logements 23 correspondants, par exemple lors de la réalisation d'opérations de maintenance.

Chaque élément de coupure 22 comporte des conducteurs électriques fixes 221 et 222, isolés électriquement l'un de l'autre et raccordés électriquement respectivement à des plages de raccordement 24, 25 correspondantes portées par le bloc de coupure 2.

Chaque élément de coupure 22 est commutable, de façon sélective et réversible, entre un état passant et un état bloquant. Dans l'état passant, l'élément 22 autorise le passage d'un courant électrique entre les plages de raccordement 24 et 25, par l'intermédiaire des conducteurs fixes 221 et 222. Dans l'état bloquant, l'élément de coupure 22 empêche la circulation de ce courant électrique.

Dans cet exemple, chaque élément de coupure 22 comporte une partie fixe, à laquelle sont solidarisés les conducteurs fixes 221 et 222 et comporte également un conducteur électrique mobile 223, solidaire d'une partie mobile 224, qui est déplaçable par rapport à la partie fixe. Ce déplacement est ici réalisé selon une direction de déplacement qui est perpendiculaire à une face avant du bloc de coupure 2.

Par exemple, les éléments de commutation 22, et notamment les parties fixe et mobile, sont réalisées en un matériau électriquement isolant, tel que du plastique, par exemple du polyamide réticulé de type PA66. Les conducteurs fixes 221 et 222, ainsi que le conducteur mobile 223, sont réalisés en un matériau électriquement conducteur, tel qu'un barreau métallique.

La partie mobile 224 est déplaçable au moyen d'un organe d'attelage 226, qui comporte ici une vis dont une tête fait saillie par rapport à une face avant de cet élément de coupure 22. Lorsque les éléments 22 sont reçus dans les logements 23, les organes 226 sont alignés entre eux le long de la face avant.

Ainsi, dans l'état passant, le conducteur mobile 223 met en contact électriquement les conducteurs fixes 221 et 222, autorisant ainsi le passage du courant électrique, alors que dans l'état bloquant, le conducteur mobile 223 est éloigné des conducteurs fixes 221 et 222, ce qui empêche le passage du courant entre ces derniers.

Dans cet exemple, l'élément de coupure 22 est par défaut dans son état bloquant. Pour commuter, l'élément 22 dans l'état passant, un effort mécanique en traction est exercé sur les têtes de vis des organes d'attelage 226 en tirant dessus selon la direction de déplacement vers l'avant de l'appareil 1. Lorsqu'aucun effort n'est exercé sur les organes d'attelage 226, un organe de rappel 225 de l'élément de coupure 22 ramène le conducteur mobile 223 vers sa position initiale, assurant donc la commutation de l'élément de coupure 22 vers son état bloquant.

L'interface de raccordement 4 est destinée à être solidarisée fixement sur la face avant du bloc de coupure 2. L'interface 4 comporte un corps principal 41, solidarisé au bloc de coupure 2, et une barquette mobile 42, déplaçable en translation par rapport au corps 41 selon une direction de déplacement. L'interface 4 est une pièce distincte du bloc actionneur 3 et du bloc de coupure 2.

La largeur du corps principal 41 est ici égale à la largeur du bloc de coupure 2.

Lorsque l'interface 4 est solidaire du bloc de coupure 2, la direction de déplacement de la barquette 42 est parallèle aux directions de déplacement respectives des parties mobiles 224 des différents éléments de coupure 22.

La barquette 42 présente une forme essentiellement plane et délimite un logement qui reçoit une plaque 43, fixée solidairement à la barquette 42 et qui est tournée vers une face avant de la barquette 42. Dans une configuration assemblée de l'appareil 1, la plaque 43 est alignée avec le bloc actionneur 3, comme expliqué plus en détail dans ce qui suit.

Ici, la largeur de la barquette 42 est supérieure à la largeur supérieure à la distance entre les organes d'attelage 266 situés sur des côtés opposés de la face avant du bloc de coupure 2. Ici, les organes 226 sont alignés en rangée selon un axe horizontal le long de la face avant du bloc de coupure 2. La distance est donc mesurée selon cet axe horizontal, entre les organes 226 situés aux extrémités opposés de la rangée.

La plaque 43 est réalisée en un matériau magnétique, par exemple en un métal ferromagnétique.

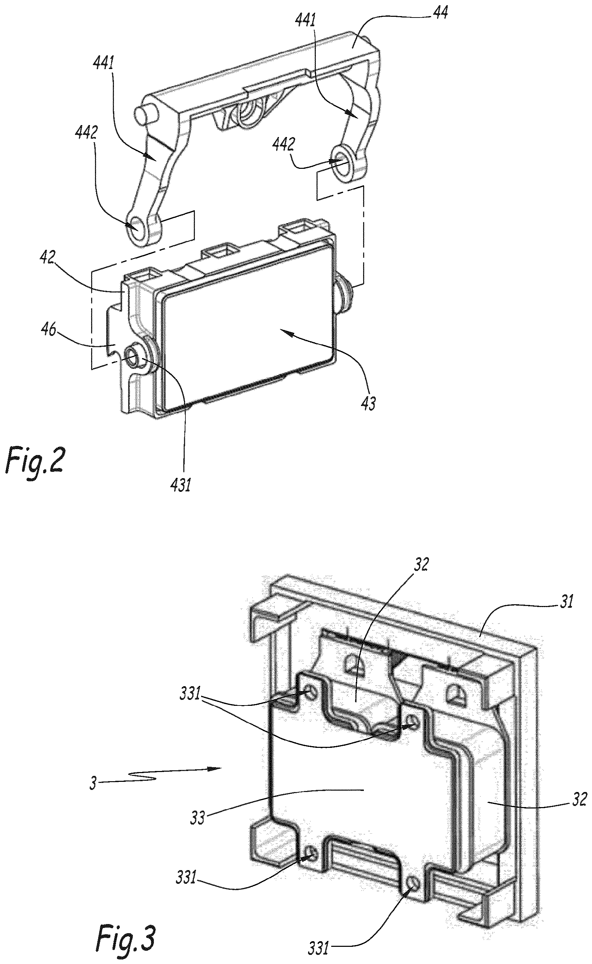

Le corps principal 41 est pourvu d'un dispositif de guidage en translation de la barquette mobile 42. Dans cet exemple, comme visible à la figure 2, ce dispositif comporte un levier 44 qui raccorde mécaniquement la barquette mobile 42 au corps principal 41. Le levier 44 permet en outre de répartir l'effort mécanique exercé sur les différents organes d'attelage 226, de sorte à assurer une commutation simultanée des éléments 22.

Par exemple, le levier 44 comporte deux bras de levier 441 symétriques qui sont chacun pourvus, sur une extrémité distale, d'un orifice 422 pour former une liaison articulée. La barquette 42 comporte des protubérances 431 extérieures qui font saillie par rapport à des bords latéraux de cette barquette. Ces protubérances 431 sont ici engagées dans les orifices 442 pour former les articulations.

Le levier 44 est quant à lui solidarisé au corps fixe 41 par des liaisons pivot, ici disposées de part et d'autre d'une branche principale du levier 44 reliant les deux bras 441 l'un à l'autre et s'étendant selon un axe longitudinal. Ainsi, le levier 44 est monté pivotant par rapport au corps 41 suivant cet axe longitudinal.

Avantageusement, le levier 44 est pourvu de ressorts qui lui permettent de retrouver sa position initiale lorsqu'aucun effort n'est exercé sur la barquette 42, par exemple des ressorts de torsion agencés au niveau des articulations avec les protubérances 431 de la barquette 42.

La face arrière de la barquette 42 est pourvue d'une zone de réception des organes 226 qui permet de solidariser en translation la barquette 42 aux organes 226. La face arrière de la barquette 42 est ici la face de la barquette 42 qui est tournée vers les organes d'attelage 226 lorsque l'interface 4 est solidarisée au bloc de coupure 2.

Ainsi, les organes d'attelage 226 ont pour rôle de permettre la solidarisation des parties mobiles 224 avec la barquette mobile 42.

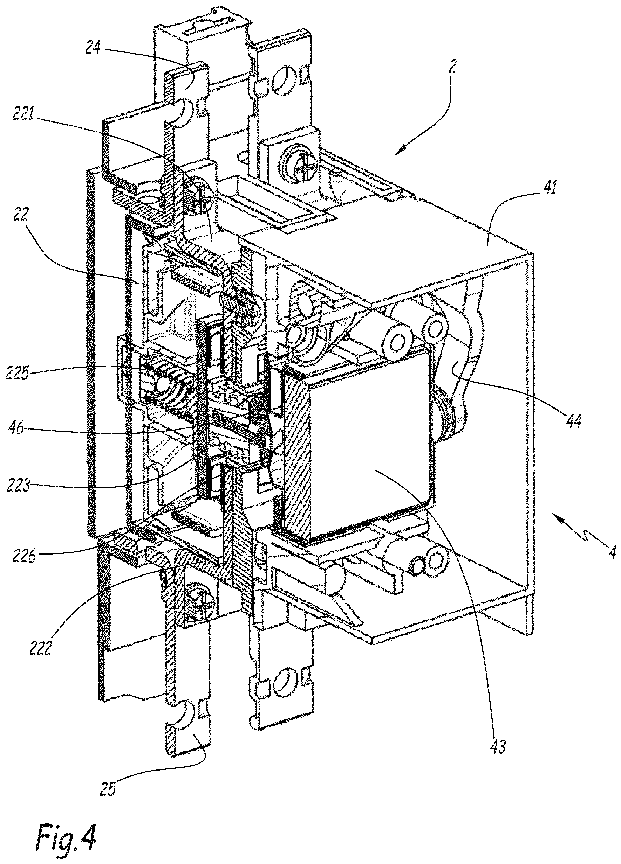

Dans cet exemple, comme visible à la figure 4, la zone de réception est conformée pour épouser la forme des têtes de vis 226 et présente notamment une forme de creux.

La zone de réception comporte également des fourches 46, chacune adaptée pour enserrer un des organes d'attelage 226, ici les têtes de vis, par exemple en prenant appui sur l'arrière des têtes de vis. Les fourches sont avantageusement pourvues d'un linguet qui permet d'assurer un serrage de chaque fourche 46 autour de la tête de vis correspondante.

Ainsi, dans la configuration assemblée, la partie mobile 224 est solidaire de la barquette 42 en translation le long de la direction de déplacement.

Le bloc actionneur 3 est adapté pour être fixé solidairement sur une face avant de l'interface 4.

Le bloc actionneur 3 est configuré pour exercer une force électromagnétique selon la direction de déplacement en réponse à un signal de commande. La force électromagnétique entraîne un déplacement de la plaque métallique 43 et donc de la barquette 42 selon la direction de déplacement.

De préférence, la plaque métallique 43 est réalisée en un matériau ferromagnétique.

A cet effet, le bloc actionneur 3 comporte un ou plusieurs électroaimants 32 ici formés par un enroulement d'un fil conducteur autour d'un noyau magnétique, non illustré. Par exemple, les électroaimants 32 ont chacun une forme cylindrique ou rectangulaire, d'axe parallèle à la direction de déplacement lorsque le bloc actionneur 3 est fixé sur l'interface 4.

Ces électroaimants 32 sont alimentés électriquement et génèrent une force électromagnétique en réponse au signal de commande. Cette force électromagnétique déplace la plaque magnétique 43 et donc déplace la barquette 42.

Le bloc actionneur 3 comporte également au moins une plaque de fond 33 liée a un ou plusieurs noyaux, qui recouvre une face arrière des électroaimants 32, et un boîtier fixe 31.

La fixation du bloc actionneur 3 sur l'interface 4 est ici réalisée au niveau de la plaque de fond 33. A cet effet, la plaque de fond 33 comporte des orifices traversants 331, ici ménagés sur des pattes qui s'étendent en saillie de façon coplanaire avec la plaque de fond 33. Dans une configuration montée du bloc 3 sur l'interface 4, les orifices 331 sont alignés avec des orifices de fixation correspondants 45 ménagés sur le corps principal 41. Ainsi, la fixation du bloc 3 sur l'interface 4 est réalisée au moyen d'éléments de fixation tels que des boulons insérés dans les orifices 331 et 45.

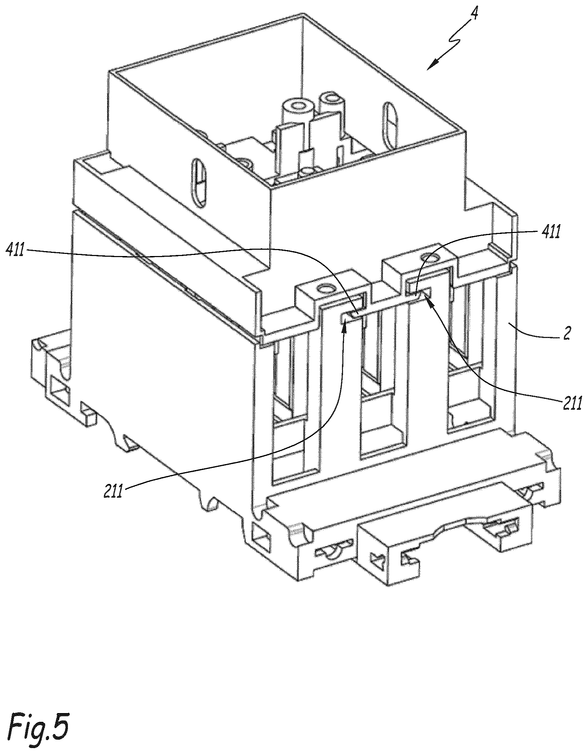

Avantageusement, comme illustré à la figure 5, la fixation de l'interface 4 sur le bloc de coupure 2 est réalisée au moyen d'un système tenon-mortaise. Dans cet exemple, la face avant du bloc de coupure 2 est pourvue de rainures ou gorges 211 qui s'étendent selon une direction verticale. La face arrière de l'interface de raccordement 4 comporte des tenons 411, de forme complémentaire à celle des rainures 211, et qui sont agencés selon une direction verticale.

La fixation de l'interface 4 sur le bloc de coupure 2 est ainsi réalisée de façon simplifiée par un mouvement de baïonnette, d'abord en plaquant l'interface 4 sur la face avant du bloc de coupure 2, puis en faisant coulisser l'interface 4 par rapport au bloc de coupure 2 selon la direction verticale, de préférence de haut en bas. Avantageusement, des butées, non illustrées, permettent de bloquer l'interface 4 à l'issue de ce mouvement.

Ce mouvement de translation verticale permet simultanément d'accrocher l'interface 4 au bloc de coupure 2 et de lier mécaniquement la barquette 42 à l'organe d'attelage 226, grâce à la fourche 46.

Ainsi, dans la configuration assemblée de l'appareil 1, l'interface de raccordement 4 raccorde le bloc actionneur 3 au bloc de coupure 2 en étant intercalé entre ces blocs 2 et 3.

En logeant la barquette mobile 42 à l'intérieur de l'interface de raccordement 4 plutôt qu'à l'intérieur du bloc actionneur 3, on évite d'avoir besoin d'utiliser un bloc actionneur 3 dédié pour chaque variante de réalisation du bloc de coupure 2. Ce sont les interfaces de raccordement 4 qui sont adaptées et optimisées en fonction des dimensions et des caractéristiques du bloc de coupure 2 sur lesquelles elles sont destinées à être fixées, telles que la largeur du bloc de coupure 2 ou l'entraxe entre les organes 226 respectifs des différents éléments 22.

Comme l'interface de raccordement 4 est moins coûteuse et moins complexe à produire que le bloc actionneur 3, la fabrication industrielle de l'appareil 1 s'en trouve améliorée.

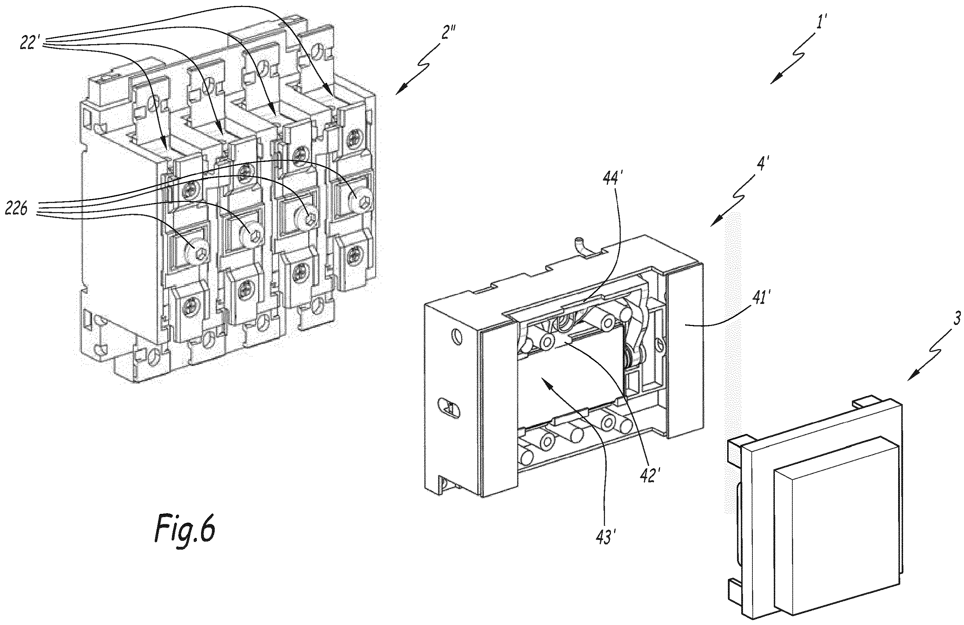

La figure 6 représente un appareil de coupure 1' selon un deuxième mode de réalisation de l'invention.

Les éléments de l'appareil électrique 1' selon ce mode de réalisation qui sont analogues au premier mode de réalisation des figures 1 à 5 portent les mêmes références et ne sont pas décrits en détail, dans la mesure où la description ci-dessus peut leur être transposée.

Les éléments de l'appareil électrique 1' selon ce mode de réalisation qui sont différents de ceux du premier mode de réalisation des figures 1 à 5 mais qui jouent un rôle similaire portent les mêmes références augmentées du symbole « ' » et seules leurs différences sont décrites en détail, dans la mesure où la description ci-dessus peut également leur être transposée.

L'appareil électrique 1' comporte un bloc de coupure 2', un bloc actionneur 3 et une interface de raccordement 4'.

Par exemple, l'appareil 1' est ici de type tétrapolaire et est destiné à commander la coupure de courants électriques alternatifs conformément à la classe AC1 telle que définie par la norme IEC60947-3 de la Commission Electrotechnique Internationale.

Le bloc de coupure 2' est analogue au bloc de coupure et en diffère notamment en ce qu'il comporte quatre éléments de coupure amovibles 22', analogues aux éléments 22 et qui jouent le même rôle. Toutefois, la composition interne des éléments de coupure 22' est adaptée à la catégorie du courant d'emploi avec des systèmes de coupures et une architecture interne spécifiques. Chacun d'entre eux comporte notamment un organe d'attelage 226. De fait, la largeur du bloc de coupure 2' est supérieure à celle du bloc de coupure 2. La largeur de l'interface 4' est augmentée en conséquence par rapport à la largeur de l'interface 4, comme décrit ci-après.

Par exemple, le bloc de coupure 2' est adapté pour être utilisé avec un circuit électrique polyphasé, comprenant trois phases électriques ainsi qu'une phase de neutre.

L'interface 4' est agencée pour être intercalée entre le bloc actionneur 3 et le bloc de coupure 2'.

L'interface 4' comporte un corps principal 41' et une barquette mobile 42' qui porte une plaque magnétique 43'. La barquette 42' est déplaçable en translation de façon analogue à la barquette 42 et ne diffère de cette dernière que par sa largeur et celle de la plaque métallique 43'. En particulier, la barquette 42' est agencée pour être solidaire en translation de chacun des organes 226 des quatre éléments de coupure 22'. Ainsi, la barquette 42' présente une largeur supérieure à celle de la barquette 42. De même, les dimensions du corps principal 41' sont modifiées de manière à correspondre à la largeur de l'embase fixe du bloc 2'. La largeur du levier 44' est également augmentée en conséquence.

Ainsi, grâce à l'interface 4', le même bloc actionneur 3 peut être utilisé indépendamment de la forme de bloc de coupure 2 ou 2'. Cela permet de rationaliser le processus de fabrication industrielle de l'appareil de coupure 1 ou 1'.

D'autres variantes sont possibles, selon le nombre d'éléments de coupure 22 ou 22', ainsi que leur disposition sur la face avant du bloc de coupure 2 ou 2' ou la valeur de l'entraxe entre les organes 226.

Les modes de réalisation et les variantes envisagés ci-dessus peuvent être combinés entre eux pour générer de nouveaux modes de réalisation de l'invention.

## Revendications

1. Appareil électrique (1 ; 1') de coupure d'un courant électrique, comportant :
- un bloc de coupure (2 ; 2'), incluant des éléments de coupure (22 ; 22') d'un courant électrique,
- un bloc actionneur (3), pourvu d'un électroaimant (32) commandable adapté pour générer une force électromagnétique en réponse à un signal de commande,
- une barquette mobile (42 ; 42') pourvue d'une plaque magnétique (43 ; 43'),
- une interface de raccordement (4 ; 4'), distincte du bloc de coupure (2 ; 2') et du bloc actionneur (3), cette interface de raccordement (4 ; 4') étant intercalée entre le bloc de coupure et le bloc actionneur, la barquette mobile (42 ; 42') étant logée à l'intérieur de l'interface de raccordement,
**caractérisé en ce que** chaque élément de coupure comporte un moyen d'attelage (226) et est actionnable au moyen de son organe d'attelage, pour commuter cet élément de coupure dans un état bloquant ou laissant passer le courant électrique, la barquette mobile étant adaptée pour exercer, sous l'effet de la force électromagnétique, un effort mécanique qui entraîne en déplacement les organes d'attelage de manière à commuter les éléments de coupure.

2. Appareil selon la revendication 1, **caractérisé en ce que** l'interface de raccordement (4 ; 4') comporte un corps principal (41 ; 41') pourvu d'un dispositif de guidage en translation de la barquette par rapport au corps principal.

3. Appareil selon la revendication 2, **caractérisé en ce que** le dispositif de guidage comporte un levier (44 ; 44') qui raccorde mécaniquement la barquette mobile au corps principal.

4. Appareil selon l'une quelconque des revendications précédentes, **caractérisé en ce que** l'interface de raccordement (4 ; 4') est fixée au bloc de coupure (2 ; 2') au moyen d'un système de fixation de type tenon-mortaise (211, 411), l'un ou l'autre du bloc de coupure (2 ; 2') ou de l'interface de raccordement comportant un tenon (411), l'autre comportant une rainure (211) de forme complémentaire au tenon.

5. Appareil (1 ; 1') selon l'une quelconque des revendications précédentes, **caractérisé en ce que** la barquette mobile présente une largeur supérieure à la distance entre les organes d'attelage (266) situés sur des côtés opposés de la face avant du bloc de coupure (2).

6. Appareil (1 ; 1') selon l'une quelconque des revendications précédentes, **caractérisé en ce que** la barquette mobile (42) est munie d'une zone de réception des organes d'attelage (226) pour arrimer la barquette mobile solidaire en translation avec des parties mobiles (224) respectives des éléments de coupure (22 ; 22') portant les organes d'attelage (226), la barquette mobile étant dimensionnée pour exercer un effort simultanément sur tous les organes d'attelage lorsqu'elle se déplace sous l'effet de la force électromagnétique.

7. Appareil (1 ; 1') selon la revendication 6, **caractérisé en ce que** les organes d'attelage (226) comportent des vis dont une tête fait saillie par rapport à l'élément de coupure, la barquette mobile (42 ; 42') étant munie de fourches (46) destinées chacune à enserrer une tête de vis correspondante pour arrimer la barquette mobile aux parties mobiles (224).

8. Appareil (1 ; 1') selon l'une quelconque des revendications précédentes, **caractérisé en ce que** la commutation de chacun des éléments de coupure (22 ; 22') est réalisée en déplaçant l'organe d'attelage selon une direction parallèle à la direction de translation de la barquette mobile.

9. Appareil (1) selon l'une quelconque des revendications précédentes, **caractérisé en ce que** le bloc de coupure comporte trois éléments de coupure (22).

10. Appareil (1') selon l'une quelconque des revendications 1 à 8, **caractérisé en ce que** le bloc de coupure comporte quatre éléments de coupure (22').

## Patentansprüche

1. Elektrisches Gerät (1; 1') zur Unterbrechung eines elektrischen Stroms, umfassend:
- einen Unterbrechungsblock (2; 2'), der Unterbrechungselemente (22; 22') für einen elektrischen Strom enthält,
- einen Aktuatorblock (3), der mit einem steuerbaren Elektromagneten (32) ausgestattet ist, der geeignet ist, eine elektromagnetische Kraft in Reaktion auf ein Steuersignal zu erzeugen,
- eine bewegliche Auflage (42; 42'), die mit einer Magnetplatte (43; 43') ausgestattet ist,
- eine Verbindungsschnittstelle (4; 4'), die von dem Unterbrechungsblock (2; 2') und den Aktuatorblock (3) getrennt ist, wobei diese Verbindungsschnittstelle (4; 4') zwischen dem Unterbrechungsblock und dem Aktuatorblock eingefügt ist, wobei die bewegliche Auflage (42; 42') innerhalb der Verbindungsschnittstelle untergebracht ist, **dadurch gekennzeichnet, dass** jedes Abschaltelement ein Kopplungsmittel (226) umfasst und mittels seines Kopplungsglieds betätigt werden kann, um dieses Unterbrechungselement in einen Zustand zu schalten, in dem es den elektrischen Strom sperrt oder durchlässt, wobei die bewegliche Auflage dazu geeignet ist, unter der Wirkung der elektromagnetischen Kraft eine mechanische Kraft auszuüben, die die Kopplungsglieder verschiebt, um die Unterbrechungselemente zu schalten.

2. Vorrichtung nach Anspruch 1, **dadurch gekennzeichnet, dass** die Verbindungsschnittstelle (4; 4') einen Hauptkörper (41; 4T) umfasst, der mit einer Vorrichtung zur Führung der Auflage in Translation relativ zum Hauptkörper ausgestattet ist.

3. Vorrichtung nach Anspruch 2, **dadurch gekennzeichnet, dass** die Führungseinrichtung einen Hebel (44; 44') umfasst, der die bewegliche Auflage mechanisch mit dem Hauptkörper verbindet.

4. Vorrichtung nach einem der vorhergehenden Ansprüche, **dadurch gekennzeichnet, dass** die Verbindungsschnittstelle (4; 4') mittels eines Befestigungssystems vom Typ Zapfen-Öffnung (211, 411) am Unterbrechungsblock (2; 2') befestigt ist, wobei entweder der Unterbrechungsblock (2; 2') oder die Verbindungsschnittstelle einen Zapfen (411) umfasst, während die andere Komponente eine Nut (211) mit komplementärer Form zum Zapfen umfasst.

5. Vorrichtung (1; 1') nach einem der vorhergehenden Ansprüche, **dadurch gekennzeichnet, dass** die bewegliche Auflage eine Breite aufweist, die größer ist als der Abstand zwischen den Kopplungselementen (266), die sich auf gegenüberliegenden Seiten der Vorderseite des Unterbrechungsblocks (2) befinden.

6. Vorrichtung (1; 1') nach einem der vorhergehenden Ansprüche, **dadurch gekennzeichnet, dass** die bewegliche Auflage (42) mit einem Bereich zur Aufnahme der Kopplungselemente (226) versehen ist, um die bewegliche Platte in Translation fest mit den jeweiligen beweglichen Teilen (224) der Unterbrechungselemente (22; 22') anzuschlagen, die die Kopplungselemente (226) tragen, wobei die bewegliche Auflage so dimensioniert ist, dass sie bei ihrer Bewegung unter der Wirkung der elektromagnetischen Kraft gleichzeitig eine Kraft auf alle Kopplungselemente ausübt.

7. Vorrichtung (1; 1') nach Anspruch 6, **dadurch gekennzeichnet, dass** die Kopplungselemente (226) Schrauben umfassen, aus denen in Bezug auf das Unterbrechungselement ein Kopf vorsteht, wobei die bewegliche Auflage (42; 42') mit Gabeln (46) versehen ist, die jeweils dazu bestimmt sind, einen entsprechenden Schraubenkopf zu ergreifen, um die bewegliche Auflage an den beweglichen Teilen (224) anzuschlagen.

8. Vorrichtung (1; 1') nach einem der vorhergehenden Ansprüche, **dadurch gekennzeichnet, dass** das Schalten jedes der Unterbrechungselemente (22; 22') durch Bewegen des Kopplungselements in einer Richtung parallel zur Translationsrichtung der beweglichen Auflage erfolgt.

9. Vorrichtung (1) nach einem der vorhergehenden Ansprüche, **dadurch gekennzeichnet, dass** der Unterbrechungsblock drei Unterbrechungselemente (22) umfasst.

10. Vorrichtung (1') nach einem der Ansprüche 1 bis 8, **dadurch gekennzeichnet, dass** der Unterbrechungsblock vier Unterbrechungselemente (22') umfasst.

## Claims

1. Electrical apparatus (1; 1') for disconnection of an electric current, comprising:
- a disconnection block (2; 2'), including elements (22; 22') for disconnection of an electric current,
- an actuation block (3), provided with a controllable electromagnet (32) which is adapted to generate an electromagnetic force in response to a control signal,
- a movable tray (42; 42') provided with a magnetic plate (43; 43'),
- a connection interface (4; 4'),
which is separate from the disconnection block (2; 2') and from the actuation block (3), this connection interface (4; 4') being intercalated between the disconnection block and the actuation block, the movable tray (42; 42') being housed inside the connection interface,
**characterised in that** each disconnection element comprises a coupling means (226) and can be actuated by means of its coupling member, in order to switch this disconnection element into a state blocking or allowing the electric current to pass, the movable tray being adapted to exert, under the effect of the electromagnetic force, a mechanical force which causes displacement of the coupling members so as to switch the disconnection elements.

2. Apparatus according to claim 1, **characterised in that** the connection interface (4; 4') comprises a main body (41; 41') provided with a device for guiding in translation the tray relative to the main body.

3. Apparatus according to claim 2, **characterised in that** the guiding device comprises a lever (44; 44') which connects mechanically the movable tray to the main body.

4. Apparatus according to any of the preceding claims, **characterised in that** the connection interface (4; 4') is fixed to the disconnection block (2; 2') by means of a fixing system of the mortise-and-tenon type (211, 411), the one or the other of the disconnection block (2; 2') or of the connection interface comprising a tenon (411), the other comprising a groove (211) of a shape complementary to the tenon.

5. Apparatus (1; 1') according to any of the preceding claims, **characterised in that** the movable tray has a width which is greater than the distance between the coupling members (266) situated on opposite sides of the front face of the disconnection block (2).

6. Apparatus (1; 1') according to any of the preceding claims, **characterised in that** the movable tray (42) is provided with a zone for receiving the coupling members (226) for fixing the movable tray integral in translation with the respective movable parts (224) of the disconnection elements (22; 22') which carry the coupling members (226), the movable tray being dimensioned in order to exert a force simultaneously on all the coupling members when it is displaced under the effect of the electromagnetic force.

7. Apparatus (1; 1') according to claim 6, **characterised in that** the coupling members (226) comprise screws, one head of which projects relative to the disconnection element, the movable tray (42; 42') being provided with forks (46) which are intended to each grasp a corresponding screw head in order to fix the movable tray to the movable parts (224).

8. Apparatus (1; 1') according to any of the preceding claims, **characterised in that** the switching of each of the disconnection elements (22; 22') is produced by displacing the coupling member according to a direction parallel to the direction of translation of the movable tray.

9. Apparatus (1) according to any of the preceding claims, **characterised in that** the disconnection block comprises three disconnection elements (22).

10. Apparatus (1') according to any of claims 1 to 8, **characterised in that** the disconnection block comprises four disconnection elements (22').
